# FASCICULE DE BREVET EUROPEEN

(11) **EP 1 593 452 B1**
(45) Date de publication et mention de la délivrance du brevet: **10.09.2008**
(21) Numéro de dépôt: 05103264.7
(22) Date de dépôt: 21.04.2005
(51) Int. Cl.: B23K 37/06

(54) **Procédé de bouchage par soudage par friction d'un trou dans une pièce métallique utilisant une pièce de bridage**
Reibschweisserfahren zum Verstopfen eines Loches in einem metallischen Werkstück unter Verwendung eines Flanschwerkzeuges
Friction welding method for closing a hole in a metallic workpiece using a clamping plate

(30) Priorité: 27.04.2004 FR 0404428
(43) Date de publication de la demande: 09.11.2005
(73) Titulaire: SNECMA, 75015 Paris (FR); SNECMA SERVICES, 75015 Paris (FR)
(72) Inventeur: Bouet, Bernard, 77200, Gretz-Armainvilliers (FR); Ferte, Jean-Pierre, 91100, Corbeil Essonnes (FR); Gourbesville, Olivier, 78170, La Celle Saint Cloud (FR); Le Saunier, Didier, Bruno, 77200, Torcy (FR)
(74) Mandataire: David, Daniel

(56) Documents cités:
- DE-A- 3 626 009
- GB-A- 2 233 923
- US-A- 5 469 617
- US-A1- 2002 125 297
- US-A1- 2003 012 619
- US-A1- 2003 201 306
- US-A1- 2004 112 941
- DATABASE WPI Section Ch, Week 198006 Derwent Publications Ltd., London, GB; Class L03, AN 1980-10319C XP002338697 -& JP 54 163757 A (MITSUBISHI ELECTRIC CORP) 26 décembre 1979 (1979-12-26)

## Description

L'invention concerne un procédé de bouchage, par soudage par friction, d'un trou d'une pièce métallique conformément au préambule de la revendication 1.

Le procédé de bouchage de trous par soudage par friction, plus connu sous le terme anglais de "friction plug welding", est utilisé pour boucher des trous dans une pièce métallique, en général des trous circulaires débouchant de chaque côté de la pièce, de forme tronconique ou cylindrique. Ce procédé est utilisé lorsqu'on souhaite limiter la perte de caractéristiques mécaniques, par rapport aux caractéristiques mécaniques de la pièce d'origine, au niveau de la zone de bouchage du trou.

Une barre métallique, généralement de même nature que le matériau de la pièce, est mise en rotation et introduite, sous l'action d'une force pilotée, dans le trou à boucher, la pièce contenant ce dernier restant fixe.

Les frictions entre la barre et la paroi du trou de la pièce provoquent l'échauffement des deux matériaux, leur plastification puis leur soudage en phase solide. Deux bourrelets sont formés de part de autre de la pièce. Il suffit alors d'usiner la barre et les bourrelets de chaque côté de la pièce pour retrouver la pièce dans sa forme d'origine, avec son trou bouché.

Avec des matériaux à adoucissement rapide et à faible température de fusion, tels que les alliages d'aluminium, notamment pour des épaisseurs inférieures à 12 mm, dans les premiers stades de la friction entre la barre et la pièce, l'échauffement brutal de la matière engendre son adoucissement très rapide. Cet adoucissement conduit localement à une perte totale de la rigidité de la pièce, autour du trou. La force appliquée sur la barre en direction de la pièce ne peut pas être réduite de façon suffisamment rapide au moment de la perte de rigidité de la pièce : la barre va alors avoir tendance à traverser la pièce.

Le soudage peut tout de même avoir lieu, mais avec une pénétration excessive de la barre. Il s'ensuit des entailles, fissures, porosités ou soufflures dans la zone de soudure, une déformation de la pièce et donc une perte des caractéristiques mécaniques de la pièce dans la zone de soudure. Pour cette raison, le procédé de bouchage de trous par soudage par friction n'est en général pas utilisé pour les alliages en aluminium, notamment pour les épaisseurs inférieures à 12 mm.

Le document GB 2,233,923 divulgue un procédé conforme au préambule de la revendication 1.

La présente invention vise à pallier ces inconvénients.

A cet effet, l'invention concerne un procédé de bouchage par soudage par friction d'un trou d'une pièce métallique selon la revendication 1.

Avantageusement, une pièce de maintien est placée du côté endroit de la pièce.

La présente invention s'applique particulièrement à un procédé de bouchage par soudage par friction d'un trou d'une bride, en alliage d'aluminium, d'un turboréacteur, mais il va de soi que la demanderesse n'entend pas limiter la portée de ses droits à cette seule application.

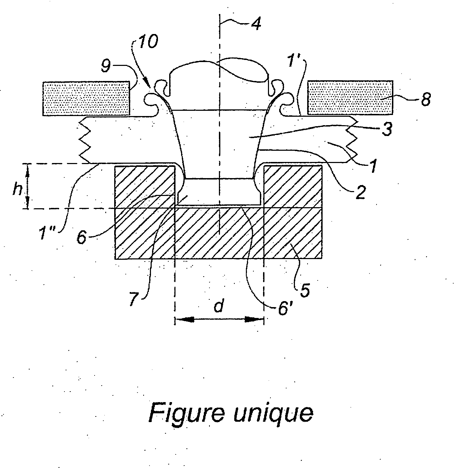

L'invention sera mieux comprise grâce à la description suivante de la forme de réalisation préférée du procédé de l'invention, en référence à la figure unique représentant une vue en coupe schématique des éléments principaux mis en oeuvre dans le procédé de l'invention.

Le procédé de l'invention s'applique à une pièce métallique, ici une bride de turboréacteur 1 en alliage d'aluminium, dont on veut boucher un trou 2. En l'espèce, on veut boucher un trou de bride qui s'est ovalisé, tout en conservant des propriétés mécaniques proches de celles du matériau de base, afin de pouvoir le percer de nouveau, une fois bouché, selon une forme correcte. A cet effet, on utilise un procédé de bouchage de trou par soudage par friction.

D'une manière générale, le trou dégradé, ici ovalisé, est préalablement usiné, afin de lui donner une forme cylindrique ou tronconique. Ce nouveau trou, ici le trou 2 que l'on va boucher, s'étend généralement suivant un axe perpendiculaire à la surface de la pièce, de préférence suivant le même axe suivant lequel s'étendait le trou d'origine. Ainsi, on élimine toute la surface dégradé du trou, afin de le rendre cylindrique ou tronconique, tout en minimisant le volume de matière enlevé.

Le trou 2 est ici de forme tronconique. Sa portion de diamètre maximum se situe sur une face qui sera considérée comme la face endroit 1' de la bride 1, sa portion de diamètre minimum se situant sur la face envers 1" de la bride 1.

Dans le procédé de bouchage de trou par soudage par friction, une barre métallique 3, ici en alliage d'aluminium également, s'étendant suivant un axe 4, est mise en rotation autour de son axe 4 et vient, sous l'action d'une force pilotée, se souder par friction, en phase solide, à la bride 1. La barre métallique 3 comporte une portion d'extrémité de forme tronconique, dont la conicité correspond à celle du trou 2. Ce procédé peut être mis en oeuvre suivant divers modes opératoires, notamment selon un mode dit de "friction pilotée" ou un mode dit de "friction inertielle".

Dans les deux modes, une première étape consiste, sous une pression préalablement définie, à mettre en contact la barre 3 et la paroi du trou 2 afin de déterminer la position exacte du contact entre les deux, la bride 1 restant fixe tout au long du procédé. La barre 3 est à cet effet déplacée, sur son axe 4, perpendiculairement à la surface de la bride 1 dans la région du trou 2, du côté de la face endroit 1' de la bride 1. Ainsi, la portion de plus petit diamètre de la barre 3 est introduite par la portion de plus grand diamètre du trou 2, puis la barre 3 est déplacée jusqu'au contact des surfaces tronconiques de la barre 3 et du trou 2. Une fois la position de contact déterminée, la barre 3 est amenée à sa position de départ, c'est-à-dire à quelques millimètres en retrait de la paroi du trou 2 de la bride 1.

Dans le cas du mode de "fric tion pilotée", la barre 3, entraînée en rotation sur son axe 4, et la paroi du trou 2 sont mises en contact et s'échauffent mutuellement par friction, sous l'action également d'une force appliquée à la barre 3, suivant son axe 4, en direction de la bride 1. Après un certain temps d'échauffement, déterminé par l'homme du métier, une force axiale supplémentaire est appliquée, tandis que la rotation est freinée. La décélération de la rotation de la barre 3 jusqu'à l'arrêt se fait typiquement en 0,2 à 0,8 seconde et dépend de la faculté de décélération de la machine d'entraînement de la barre 3. Le soudage par friction se produit alors, la force axiale appliquée étant maintenue après l'arrêt de la rotation de la barre 3 afin d'assurer une bonne qualité de soudure.

Dans le cas du mode de "friction inertielle", la barre 3 est de la même façon placée en position de départ et entraînée en rotation. Lorsqu'elle est amenée en position de contact, son moteur d'entraînement en rotation est débrayé, si bien que l'énergie emmagasinée dans le système tournant, via la vitesse de rotation et le volant d'inertie du moteur, qui a été préalablement défini et dimensionné, est dissipée dans la soudure de la même façon que dans le cas du mode "friction pilotée".

Les modes opératoires décrits ci-dessus sont bien connus de l'homme du métier et ne seront pas décrits plus précisément. Ils n'ont été donnés qu'à titre d'illustration pour aider à la compréhension de l'invention, mais ne sont pas limitatifs du mode opératoire choisi pour le bouchage de trous par soudage par friction de l'invention. Il existe d'autres modes opératoires qui pourraient être mis en oeuvre.

Quel que soit le mode opératoire choisi, le procédé de l'invention se distingue des procédés de l'art antérieur par l'utilisation d'une pièce de bridage 5, qui est mise en contact avec la surface envers 1" de la bride 1, avant l'opération de soudage et y est maintenue pendant toute la durée de cette opération. Cette pièce de bridage 5 se présente sous la forme d'un support quelconque dont la forme est adaptée à la pièce dont on veut boucher un trou, c'est-à-dire ici à la bride 1. Elle peut, soit être rapportée contre la bride 1 par un mécanisme de maintien et de mise en contact, soit servir de support à la bride 1, comme c'est le cas ici. Cette pièce de bridage 5 est rigide et sa température de fusion est supérieure à celle des matériaux que comprennent la barre 3 et/ou la bride 1 ; elle est ici en acier et se présente sous la forme d'une plaque 5.

Il va de soi que la pièce de bridage 5 pourrait être placée du côté envers de la bride 1 juste au début de l'opération de soudage ou pendant cette dernière à un moment ad hoc. Conformément à l'invention, la pièce de bridage 5 est mise en contact avec la surface envers de la bride 1 avant le début de l'opération de soudage et y est maintenue tout au long de cette opération.

La pièce de bridage 5 comprend une cavité cylindrique 6, que l'on place à l'aplomb du trou 2 de la bride 1. La surface 6' de fond de cette cavité sert de butée axiale pour la barre 3. Ainsi, lorsque la barre 3 est contrainte contre la bride 1, l'échauffement dû à la friction entraîne une plastification des matériaux et, du fait de la force axiale appliquée, une avancée de la barre 3 dans le trou 2 ; cette avancée est bridée par la butée de la barre 3 sur le fond 6' de la cavité 6. En outre, l'espace défini par la cavité 6 permet de contenir le mélange de soudure, c'est-à-dire le mélange de matériaux échauffés de la barre 3 et de la bride 1, qui ne s'échappe pas. Le bourrelet 7 formé par l'opération de soudage est donc contenu dans la cavité 6 et refroidi dans cette dernière.

La rotation de la barre 3 dans le trou 2, associée à la malléabilité des matériaux de soudure et à la fonction de bridage que remplit la pièce de bridage 5 du côté envers de la bride 1, tant au niveau du trou 2, dans la cavité 6, que sur la portion de surface de la bride 1 entourant le trou 2 et en contact avec la pièce de bridage 5, peut entraîner un effet de vis provoquant la remontée des matériaux de soudure malléables le long de la barre 3, du côté endroit de la bride 1. Afin de d'empêcher un tel phénomène et conformément à l'invention, une pièce de maintien 8 est plaquée sur la surface endroit de la bride 1. Cette pièce de maintien 8 se présente sous la forme d'une plaque 8, percée en son centre d'un évidement 9 permettant le passage de la barre 3. Les dimensions précises de cet évidement 9 sont choisies par l'homme du métier en fonction de ses paramètres opératoires et des dimensions qu'il souhaite pour les bourrelets 10 formés du côté endroit de la bride 1. La plaque 8 est ici en acier.

La cavité 6 est ici cylindrique, de profondeur h et de diamètre d. Par profondeur, on entend la hauteur du cylindre dont la cavité 6 a la forme. Les dimensions de la cavité 6 sont choisies en fonction de l'épaisseur de la bride 1 et des dimensions de son trou 2, en fonction du soudage escompté, et seront déterminées expérimentalement par l'homme du métier. A titre d'exemple, la demanderesse a découvert qu'un bon soudage était obtenu, pour un trou de 10 mm de diamètre et de 5 mm d'épaisseur, avec une cavité de 14 mm de diamètre et de 4 à 5 mm de profondeur.

Conformément à l'invention, la cavité présente un diamètre au minimum égal à 1,3 fois le diamètre envers du trou à boucher et d'une profondeur comprise en 60% et 110% de l'épaisseur du trou.

Ainsi, le procédé de l'invention, avec l'utilisation des pièces de bridage 5 et de maintien 8, permet d'assurer une force de réaction contre la force d'application de la barre 3 contre la pièce 1 à boucher, qui pourra donc être constante, d'empêcher une traversée intempestive de la barre 3 dans le trou 2, de contenir l'écoulement des bourrelets 7, 10 de soudure, de contenir l'énergie de soudage au niveau de la soudure, et donc de limiter les déformations de la pièce à boucher et d'éviter l'apparition de porosité, d'entailles, de fissures et autres soufflures.

Une fois l'opération de soudage terminée, un traitement thermique pourra permettre d'assurer la conservation des propriétés mécaniques de la pièce bouchée, qui sera usinée de façon à retrouver sa forme initiale, avec son trou bouché.

Le procédé de l'invention a été décrit en relation avec une pièce à boucher en alliage d'aluminium, mais il va de soi qu'elle s'applique à tout type d'alliage, notamment des alliages de nickel, de titane ou de fer. Il a en outre été décrit en relation avec une barre de même nature que la pièce à boucher, mais il pourra être utilisé une barre d'une nature différente. Enfin, la pièce de bridage et la pièce de maintien peuvent être en acier ou tout autre matériau inerte vis-à-vis du matériau de la pièce à boucher, dans les conditions de mise en oeuvre du procédé tel que défini dans les revendications.

## Revendications

1. Procédé de bouchage, par soudage par friction, d'un trou (2) d'une pièce métallique (1), débouchant sur une surface endroit (1') et une surface envers (1") de la pièce (1), dans lequel une barre métallique (3) est mise en rotation et est introduite dans le trou (2), par son côté endroit, pour y être soudée par friction, **caractérisé par le fait qu'**une pièce de bridage (5), comprenant une cavité (6), est placée du côté envers de la pièce (1) durant l'opération de soudage par friction, la pièce de bridage (5) étant mise en contact contre la surface envers (1") de la pièce (1), la cavité (6), placée à l'aplomb du trou (2), étant cylindrique et comprenant un diamètre (d) au minimum égal à 1,3 fois le diamètre envers du trou (2) et une profondeur comprise en 60% et 110% de l'épaisseur du trou (2), et une pièce de maintien (8) est placée du côté endroit de la pièce (1) durant l'opération de soudage par friction.

2. Procédé selon la revendication 1, dans lequel la pièce de bridage (5) comprend une plaque en acier ou tout autre matériau inerte vis-à-vis du matériau de la pièce à boucher.

3. Procédé selon l'une des revendications 1 à 2, dans lequel la pièce de maintien (8) est mise en contact contre la surface endroit (1') de la pièce (1).

4. Procédé selon l'une des revendications 1 à 3, dans lequel la pièce de maintien (8) comprend un évidement (9) de passage de la barre (3).

5. Procédé selon l'une des revendications 1 à 4, dans lequel la pièce de maintien (8) comprend une plaque en acier ou tout autre matériau inerte vis-à-vis du matériau de la pièce à boucher.

6. Procédé selon l'une des revendications 1 à 5, dans lequel la pièce (1) comprend un alliage d'aluminium, de nickel, de titane ou de fer.

## Claims

1. Friction welding method for closing a hole (2) in a metallic workpiece (1), opening out onto a front surface (1') and a back surface (1") of the workpiece (1), in which a metal bar (3) is rotated and inserted into the hole (2), on its front side, to be friction welded, **characterised in that** a clamping plate (5), comprising a cavity (6), is placed on the back side of the workpiece (1) during the friction welding operation, the clamping plate (5) being contacted with the back surface (1") of the workpiece (1), the cavity (6), being placed in line with the hole (2), being cylindrical in shape and comprising a diameter (d) at least equal to 1.3 times the back diameter of the hole (2) and a depth of between 60% and 110% of the thickness of the hole (2), and a support piece (8) is placed on the front side of the workpiece (1) during the friction welding operation.

2. Method as set forth in claim 1, in which the clamping plate (5) comprises a plate made of steel or any other material inert to the material of the piece to be closed.

3. Method as set forth in one of claims 1 or 2, in which the support piece (8) is contacted with the front surface (1') of the workpiece (1).

4. Method as set forth in one of claims 1 to 3, in which the support piece (8) comprises a recess (9) for the bar (3) to pass through.

5. Method as set forth in one of claims 1 to 4, in which the support piece (8) comprises a plate made of steel or any other material inert to the material of the piece to be closed.

6. Method as set forth in one of claims 1 to 5, in which the workpiece (1) comprises an aluminium, nickel, titanium or iron alloy.

## Patentansprüche

1. Verfahren zum Verstopfen eines Lochs (2) eines Metallteils (1) durch Reibschweißen, das an einer oberen Fläche (1') und einer rückseitigen Fläche (1") des Teils (1) mündet, bei welchem ein Metallstab (3) in Drehung versetzt und in das Loch (2) durch seine obere Seite eingeführt wird, um dort durch Reibung verschweißt zu werden, **dadurch gekennzeichnet, daß** ein Flanschwerkzeug (5) mit einem Hohlraum (6) während der Reibschweißoperation an die rückseitige Fläche des Teils (1) gesetzt wird, wobei das Flanschwerkzeug (5) gegen die rückseitige Fläche (1") des Teils (1) in Kontakt gebracht wird, wobei der Hohlraum (6), der senkrecht zu dem Loch (2) gesetzt ist, zylindrisch ist und einen Durchmesser (d) aufweist, der mindestens 1,3-mal gleich dem rückseitigen Durchmesser (d) des Lochs ist und eine Tiefe aufweist, die zwischen 60 % und 110 % der Dicke des Lochs (2) liegt, und ein Halteteil (8) während der Reibschweißoperation an die obere Seite des Teils (1) gesetzt wird.

2. Verfahren nach Anspruch 1, bei welchem das Flanschwerkzeug (5) eine Platte aus Stahl oder jedem anderen gegenüber dem Material des zu verstopfenden Teils inerten Material aufweist.

3. Verfahren nach einem der Ansprüche 1 bis 2, bei welchem das Halteteil (8) gegen die obere Fläche (1') des Teils (1) in Kontakt gebracht wird.

4. Verfahren nach einem der Ansprüche 1 bis 3, bei welchem das Halteteil (8) eine Ausnehmung (9) zum Durchgang des Stabes (3) aufweist.

5. Verfahren nach einem der Ansprüche 1 bis 4, bei welchem das Halteteil (8) eine Platte aus Stahl oder jedem anderen gegenüber dem Material des zu verstopfenden Teils inerten Material aufweist.

6. Verfahren nach einem der Ansprüche 1 bis 5, bei welchem das Teil (1) eine Aluminium-, Nickel, Titan- oder Eisenlegierung aufweist.
